Europäisches Patentamt

European Patent Office

Office européen des brevets

(11) Veröffentlichungsnummer : **0 150 004**
**B1**

# (12) EUROPÄISCHE PATENTSCHRIFT

(45) Veröffentlichungstag der Patentschrift :
**27.07.88**

(51) Int. Cl.⁴ : **B 32 B 27/36**

(21) Anmeldenummer : **85100118.0**

(22) Anmeldetag : **07.01.85**

(54) **Verbundfolien aus Polycarbonaten und Polyalkylenterephthalaten.**

(30) Priorität : **18.01.84 DE 3401480**

(43) Veröffentlichungstag der Anmeldung :
**31.07.85 Patentblatt 85/31**

(45) Bekanntmachung des Hinweises auf die Patenterteilung : **27.07.88 Patentblatt 88/30**

(84) Benannte Vertragsstaaten :
**DE FR GB IT NL**

(56) Entgegenhaltungen :
**GB-A- 2 019 780**

(73) Patentinhaber : **BAYER AG**
**Konzernverwaltung RP Patentabteilung**
**D-5090 Leverkusen 1 Bayerwerk (DE)**

(72) Erfinder : **Wank, Joachim, DI.**
**Zülpicherstrasse 7**
**D-4047 Dormagen 5 (DE)**
Erfinder : **Kubens, Rolf, Dr.**
**Carl-Leverkus-Strasse 1**
**D-5068 Odenthal (DE)**
Erfinder : **Waldenrath, Werner, DI.**
**Maastrichter Strasse 40**
**D-5000 Koeln 1 (DE)**

## Beschreibung

Für die Herstellung von Schalttafeln, Namensschildern und Folienschaltern werden sowohl Folien aus Polycarbonat als auch aus Polyethylenterephthalat eingesetzt. Bei der Auswahl der Folien wird im allgemeinen eine Polycarbonatfolie bevorzugt, da diese sich einfach mit einer matt strukturierten und daher kratzunempfindlichen Oberfläche herstellen läßt und sich zudem sehr einfach mit Siebdruckverfahren bedrucken läßt.

Folien aus Polyethylenterephthalat, die nur mit hochglänzenden, spiegelnden und somit kratzempfindlichen Oberflächen herstellbar sind, lassen sich schlecht bedrucken und werden nur dann eingesetzt, wenn an die Folie hohe Forderungen hinsichtlich Lösungsmittelbeständigkeit gestellt werden, beispielsweise um die im Gebrauch auftretende Verschmutzung der Oberfläche mit Lösungsmitteln reinigen zu können.

Es hat deshalb nicht an Versuchen gefehlt, transparente Folien zu entwickeln, die sich entsprechend wie Polycarbonat sowohl mit polierten als auch mit matt strukturierter Oberfläche, herstellen lassen, gut bedruckbar und gleichzeitig lösungsmittelbeständig sind.

Die naheliegende Verwendung von bekannten Folien aus Polycarbonat-Polyester-Mischungen (siehe beispielsweise JA-49 080 162, JA-49 113 849, JA-51 064 561, US-Patente 3 956 229, 3 975 355, DE-OS-2 647 565, US-Patente 4 155 898 und 4 157 997 sowie JA 56 034 428) führt nicht zum Ziel, da derartige Folien sich bei hohem Anteil an Polyalkylenterephthalat schlecht bedrucken lassen und bei hohem Polycarbonatanteil nicht ausreichend lösungsmittelbeständig sind.

Gegenstand der vorliegenden Erfindung sind transparente Verbundfolien bestehend aus

A) einer transparenten, thermoplastischen Polycarbonatfolie einer Dicke von etwa 50μm bis 350μm, vorzugsweise 100μm bis 200μm, und

B) einer transparenten, thermoplastischen Polyalkylenterephthalatfolie einer Dicke von 10μm bis 100μm, vorzugsweise 25μm bis 50μm.

Gegenstand der vorliegenden Erfindung ist auch die Verwendung der Verbundfolien im Herstellung von Schalttafeln, Namensschildern und Folienschaltern.

Transparenz im Sinne der vorliegenden Erfindung heißt, daß die Lichtdurchlässigkeit $\geq 50\%$ ist, gemessen mit Ulbricht Kugel, damit der Streulichtanteil mit erfaßt wird, da bei strukturierten Folien ein erheblicher Anteil des Lichtes diffus gestreut wird.

Bedruckbarkeit im Sinne der vorliegenden Erfindung heißt, daß die Folie mit handelsüblichen Lacken, vorzugsweise Siebdruckfarben, ohne Vorbehandlung bedruckt werden kann und die Druckfarbe sich innig mit der Folienoberfläche verbindet. Bei Prüfung der Haftfähigkeit durch Gitterschnitttest, nach DIN 53 151, darf sich die Farbe an der Schnittkante nicht lösen, wenn eine Selbstklebefolie über die Schnittstelle geklebt und anschließend abgezogen wird.

Lösungsmittelbeständigkeit im Sinne der vorliegenden Erfindung heißt kein Angriff der Oberfläche durch aliphatische, cycloaliphatische oder aromatische Lösungsmittel wie Aceton, Methylenchlorid, Cyclohexanon, Benzylalkohol, Toluol etc.

Oberflächenstrukturierung im Sinne der vorliegenden Erfindung heißt, daß die Folienoberfläche eine Rauhigkeit $R_{3z}$ von 3 bis 50 μm besitzt (gemessen nach DIN 4768).

Die erfindungsgemäßen Verbundfolien sind unseres Erachtens neu und besitzen die gewünschte Eigenschaftskombination aus Transparenz, Lösungsmittelbeständigkeit und Bedruckbarkeit, so daß sie für den eingangs dargelegten Verwendungszweck geeignet sind.

Aus der britischen Patentanmeldung Nr. 2 019 780 sind mehrschichtige hohle Behälter bekannt, die aus wenigstens einer Schicht aus thermoplastischem Polyester und wenigstens einer Schicht aus Polycarbonat bestehen. Die bekannten Behälter weisen jedoch andere Schichtdicken auf.

Gemäß US-Patent 3 730 767 sind Magnetträger bekannt, die auf einer Polyestergrundlage eine Zwischenschicht, die als Haftvermittler dient, enthalten, welche jeweils aus einem Polyester-Polycarbonatgemisch besteht, wobei der Gehalt an Polycarbonat 1 bis 25 Gew. %, bezogen auf Gewicht des Polyesters, beträgt. Die Zwischenschicht dient zur besseren Haftung der Magnetschicht.

Gemäß japanischer Patentanmeldung Nr. 43 191 von 1971, publiziert am 3.2.1973 unter Nr. 8880 sind biaxial gestreckte Folien bekannt, die aus Polyesterfilmen aufgebaut sind, wobei einer der Polyesterfilme ein anderes thermoplastisches Harz enthalten muß, das mit dem Polyester unverträglich ist, in Mengen von 0.01 bis 2 Gew. %, bezogen auf Gewicht Polyester. Als anderes thermoplastisches Harz kann beispielsweise Polycarbonat dienen. Ziel dieser Verfahrensweise sind klar-transparente biaxial gestreckte Polyesterfilmlaminate mit guten Gleiteigenschaften.

Gemäß japanischer Patentanmeldung Nr. 159 149 von 1976, publiziert am 20.7.1978 unter Nr. 82 413 sind Kombinationen aus dielektrischen Folien und rußgefüllten Polycarbonatfolien bekannt. Die dielektrischen Folien können unter anderem aus Polyesterharzen bestehen. Die Laminate dienen als elektrostatisches Aufzeichnungsmaterial.

Die erfindungsgemäßen Polyester-Polycarbonatverbundfolien sind unseres Erachtens durch diese drei letztgenannten Literaturstellen weder vorweggenommen noch nahegelegt.

Zur Herstellung der Polycarbonatfolienkomponente sind die durch Umsetzung von Diphenolen, insbesondere von Dihydroxydiarylalkanen, mit Phosgen oder Diestern der Kohlensäure erhältlichen Polykondensate geeignet, wobei außer den unsubstituierten Dihydroxydiarylalkalen auch solche geeignet sind, deren Arylreste in o- und/oder m-Stellung zur Hydroxylgruppe Methylgruppen oder Halogenatome tragen. Ebenso sind verzweigte Polycarbonate geeignet.

Die geeigneten Polycarbonate haben mittlere Gewichtsmittel-Molekulargewichte $\overline{M}w$ zwischen 10 000 und 100 000, vorzugsweise zwischen 20 000 und 40 000, ermittelt durch Messungen der rel. Viskosität in $CH_2Cl_2$ bei 25° C und einer Konzentration von 0.5 g pro 100 ml.

Geeignete Diphenole sind beispielsweise Hydrochinon, Resorcin, 4.4'-Dihydroxydiphenyl, Bis-(hydroxy-phenyl) alkane wie beispielsweise $C_1$-$C_8$-Alkylen- bzw. $C_2$-$C_8$-Alkylidenbisphenole, Bis-(hydroxy-phenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone, ferner $\alpha$, $\alpha'$-Bis-(hydroxyphenyl)-diisopropylbenzol sowie die entsprechenden kernalkylierten bzw. kernhalogenierten Verbindungen. Bevorzugt sind Polycarbonate auf Basis Bis-(4-hydroxyphenyl)-propan-2.2 (Bisphenol A), Bis-(4-hydroxy-3.5-dichlorphenyl)-propan-2.2 (Tetrachlorbisphenol A), Bis-(4-hydroxy-3.5-dibromphenyl)-propan-2.2 (Tetrabrombisphenol A), Bis-(4-hydroxy-3.5-dimethylphenyl)-propan-2.2 (Tetramethylbisphenol A), Bis-(4-hydroxy-phenyl)-cyclohexan-1.1 (Bisphenol Z) sowie auf Basis von Dreikernbisphenolen wie $\alpha.\alpha'$-Bis-(4-hydroxyphenyl)-p-diisopropylbenzol.

Weitere für die Herstellung der Polycarbonate geeignete Diphenole sind beispielsweise in den US-Patenten 3 028 365, 3 062 781, 3 148 172 und 3 271 367 beschrieben.

Zur Herstellung der Polyalkylenterephthalatfolienkomponente B) erfindungsgemäß geeignete Polyalkylenterephthalate sind Reaktionsprodukte aus aromatischen Dicarbonsäuren oder ihren reaktionsfähigen Derivaten (z. B. Dimethylestern) und aliphatischen, cycloaliphatischen oder araliphatischen Diolen und Mischungen dieser Reaktionsprodukte. Sie lassen sich nach bekannten Methoden herstellen. (Sie dazu beispielsweise Kunststoff-Handbuch, Bd. VIII, S. 695 ff, Carl Hanser Verlag, München 1973).

Bevorzugte Polyalkylenterephthalate enthalten mindestens 80, insbesondere mindestens 90 Mol-%, bezogen auf die Dicarbonsäurekomponente, Terepthalsäurereste und mindestens 80, insbesondere mindestens 90 Mol-%, bezogen auf die Diolkomponente, Ethylenglykol- und/oder Butandiol-1,4-Reste, besonders bevorzugt Butandiol-1.4-Reste.

Diese bevorzugten Polyalkylenterephthalate können neben Terephthalsäureresten bis zu 20 Mol-% Reste anderer aromatischer oder cycloaliphatischer-Dicarbonsäuren mit 8-14 C-Atomen oder aliphatischer Dicarbonsäuren mit 4-12 C-Atomen enthalten, wie z. B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Diese bevorzugten Polyalkylenterephthalate können neben Ethandiol- bzw. Butandiol-1,4-Resten bis zu 20 Mol-% anderer aliphatischer Diole mit 3-12 C-Atomen oder cycloaliphatischer Diole mit 6-21 C-Atomen enthalten, z. B. Reste von Propandiol-1,3, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 2,2-Bis-(4-hydroxy-cyclohexyl)-propan und 2,4-Dihydroxy-1,1,3,3-tetramethylcyclobutan sowie solche mit aromatischen Resten wie 1,4-Di-($\beta$-hydroxyethoxy)-benzol, 2,2-Bis-(3-$\beta$-hydroxy-ethoxy-phenyl)-propan und 2,2-Bis-(4-hydroxypropoxy-phenyl)-propan (DE-OS-24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS-19 00 270 und der US-PS-3 692 744 beschrieben sind, verzweigt werden. Beispiel bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z. B. deren Dialkylestern) und Ethylenglykol und/oder Butandiol-1,4 hergestellt worden sind, ganz besonders jedoch aus Butandiol-1.4 hergestellt worden sind.

Die verwendeten Polyalkylenterephthalate besitzen im allgemeinen eine Intrinsic-Viscosität von 0,4 bis 1,5 dl/g, vorzugsweise 0,5-1,3 dl/g, insbesondere 0,6-1,2 dl/g, jeweils gemissen in Phenol/o-Dichlorbenzol (1 : 1 Gew.-Tl.) bei 25° C.

Die Herstellung der erfindungsgemäßen Verbundfolien erfolgt nach einem Coextrusionsverfahren, wobei die Schmelze der beiden Komponenten A) und B) über einen Zweischichtadapter bei Temperaturen von etwa 260° C bis etwa 290° C einer Breitschlitzdüse zugeführt werden und die Schmelzfahne über einen Chillrollabzug ausgezogen wird. Hierbei muß die erste Abzugswalze stark gekühlt sein (Temperatur 10° C bis 50° C) und kann je nach Anforderung mit einer polierten oder strukturierten Oberfläche versehen sein.

Wichtig ist hierbei, daß die Abkühlung der Schmelzfahne innerhalb von 0,5 bis 3 Sekunden erfolgt.

Gegenstand der vorliegenden Erfindung ist somit auch ein Verfahren zur Herstellung der erfindungsgemäßen Verbundfolien das dadurch gekennzeichnet ist, daß die Schmelzen der beiden Komponenten A) und B) über einen Zweischichtadapter bei Temperaturen von 260° C bis 290° C einer Breitschlitzdüse zugeführt werden, und daß die Schmelzfahne über einen Chillrollabzug ausgezogen wird, wobei die erste Abzugswalze auf Temperaturen von etwa 10° C bis 50° C abgekühlt sein muß, und wobei die Oberfläche dieser Abzugswalze je nach Anforderung mit einer polierten oder mit einer strukturierten Oberfläche versehen ist.

Die erfindungsgemäßen Folien können einerseits die in der Praxis geforderte matt strukturierte, lösungsmittelbeständige Oberfläche aufweisen, bedingt durch die Polyalkylenterephthalatkomponente und andererseits die geforderte leichte Bedruckbarkeit der Rückseite bedingt durch die Polycarbonatkomponente. Des weiteren sind diese Folien hochtransparent, so daß die auf der Rückseite aufgedruckten Farben klar mit hoher Tiefenwirkung bei Betrachtung von der Vorderseite erkennbar sind.

Daß man derartige, hochwertige Folien durch Coextrusion von Polycarbonat und Polyalkylenterephthalat erhalten kann, ist insofern überraschend, als einerseits Polyalkylenterephthalate teilkristalline Polymere sind, deren Schmelzen man sehr schnell auf Temperaturen unterhalb ihrer jeweiligen Einfriertemperatur $T_G$, die zwischen 80 °C und 40 °C liegt, abkühlen muß, um Transparenz von Polyalkylenterephthalatfolien zu erhalten, und andererseits Polycarbonatschmelzen verhältnismäßig langsam abgekühlt werden müssen, um spannungsarme Polycarbonatfolien mit der notwendigen Oberflächenqualität zu erhalten. Trotz der schnellen Abkühlung bei dem erfindungsgemäßen Coextrusionsverfahren ist die Oberflächenqualität der Polycarbonatfolienkomponente A) vergleichbar gut wie von Polycarbonatfolien, die durch Extrusion und langsame Abkühlung erhalten werden.

Bei Verwendung einer Abzugswalze mit strukturierter Oberfläche wird die Polyalkylenterephthalatoberfläche der Verbundfolie entsprechend matt strukturiert, sofern bei der Coextrusion die Polyalkylenterephthalatschicht der strukturierten Walzenoberfläche zugewandt ist.

Eine weitere Herstellungsvariante für die erfindungsgemäßen Verbundfolien besteht darin, daß man eine beidseitig blanke, unverstreckte Folie aus Polyalkylenterephthalt mit einer Schmelze aus Polycarbonat einseitig beschichtet wird, wobei die Polyalkylenterephthalatfolie auf eine Kühlwalze mit strukturierter Oberfläche aufläuft und die Schmelzfahne der Polcarbonatschmelze mit einer weiteren, vorzugsweise mit temperaturbeständigem Gummi überzogenen Walze, an die Polyalkylenterephthalatfolie angepreßt wird. Durch die Wärmekapazität der Polycarbonatschmelze wird die Polyalkylenterephthalatfolie so stark erweicht, daß sie die Oberflächenstruktur der Kühlwalze annimmt. Dagegen führten die Versuche, Folien aus Polyalkylenterephthalat mit Folien aus Polycarbonat zu kaschieren nicht zu den erfindungsgemäßen Verbundfolien mit dem gewünschten Eigenschaftsbild, da vor allem Schlieren im Kaschierkleber bei der anschließenden Bedruckung auf der Polycarbonatseite sichtbar werden, und da nur die Variante mit glänzender, also polierter Sichtseite verfügbar ist.

Gegenstand der vorliegenden Erfindung ist somit auch ein Verfahren zur Herstellung der erfindungsgemäßen Verbundfolien aus den Komponenten A) und B), das dadurch gekennzeichnet ist, daß man eine beiseitig blanke, transparente unverstreckte, thermoplastische Folie aus Polyalkylenterephthalat einer Dicke von 10 µm bis 100 µm gemäß Komponente B) mit einer zwischen 270 und 330 °C heißen Schmelze aus thermoplastischem, transparentem Polycarbonat einseitig beschichtet, wobei die Polyalkylenterephthalatfolie auf eine Kühlwalze mit strukturierter Oberfläche und einer Temperatur von 10 °C bis 50 °C aufläuft, und wobei die Schmelzfahne der Polycarbonatschmelze mit einer weiteren, vorzugsweise mit temperaturbeständigem Gummi überzogenen Walze an die Polyalkylenterephthalatfolie mit einem Druck von 1 bis 100 N/cm Walzenlänge angepreßt wird.

Beispiel

Ein Homopolycarbonat aus 2.2-Bis (4-hydroxypheny)-propan mit einer relativen Viskosität von 1,42 (gemessen bei 25 °C mit Ubbelohde-Viskosimeter in $CH_2CL_2$ und einer Konzentration von 0,5 g/100 ml) wird in einem Einwellenextruder bei Zylindertemperaturen von 300 °C aufgeschmolzen und die Schmelze über einen 2-Schichtadapter einer Breitschlitzdüse zugeführt.

Ein Polybutylenterephthalat mit einer Intrinsic-Viskosität von 1,25 (gemessen in Phenol/o-Dichlorbenzol bei 25 °C) wird auf einem Einwellenextruder aufgeschmolzen und die Schmelze ebenfalls über den 2-Schichtadapter der gemeinsamen Breitschlitzdüse zugeführt. Der Kanalguerschnitt des Adapters für die Polycarbonatschmelze ist 3 x größer als der für die Polybutylenterephthalat-Schmelze.

Die Schmelze der übereinandergeschichteten Polymeren wird aus dem Lippenspalt der Breitschlitzdüse auf eine Kühlwalze mit strukturierter Oberfläche, die eine Oberflächentemperatur von 23 °C besitzt, ausgedrückt. Die durch Erkalten der Schmelze erhaltene Folie ist hochtransparent und die Polybutylenterephthalat-Schicht hat eine kratzunempfindliche strukturierte Oberfläche.

**Patentansprüche**

1. Transparente Verbundfolie bestehend aus
A) einer transparenten, thermoplastischen Polycarbonatfolie einer Dicke von etwa 50 µm bis 350 µm, und
B) einer transparenten, thermoplastischen Polyalkylenterephthalatfolie einer Dicke von 10 µm bis 100 µm.

2. Verbundfolien gemäß Anspruch 1, dadurch gekennzeichnet, daß die Dicke der Polycarbonatfolie 100 µm bis 200 µm ist.

3. Verbundfolien gemäß Anspruch 1 und 2, dadurch gekennzeichnet, daß die Dicke der Polyalkylenterephthalatfolie 25 µm bis 50 µm ist.

4. Verfahren zur Herstellung der Verbundfolien gemäß Anspruch 1 bis 3, dadurch gekennzeichnet, daß die Schmelzen der beiden Komponenten A) und B) über einen Zweischichtadapter bei Temperaturen von 260 °C bis 290 °C einer Breitschlitzdüse zugeführt werden, und daß die Schmelzfahne über einen Chillrollabzug ausgezogen wird, wobei die erste Abzugswalze auf Temperaturen von etwa 10 °C bis 50 °C abgekühlt sein muß, und wobei die Oberfläche diese Abzugswalze je nach Anforderung mit einer polierten oder mit einer strukturierten Oberfläche versehen ist.

5. Verfahren zur Herstellung der Verbundfolien gemäß Anspruch 1 bis 3, dadurch gekennzeichnet, daß man eine beidseitig blanke, transparente, unverstreckte, thermoplastische Folie aus Polyalkylenterephthalat einer Dicke von 10 bis 100 μm mit einer zwischen 270 und 330 °C heißen Schmelze aus thermoplastischem, transparentem Polycarbonat einseitig beschichtet, wobei die Polyalkylenterephthalatfolie auf eine Kühlwalze mit strukturierter Oberfläche und einer Temperatur von 10 °C bis 50 °C aufläuft, und wobei die Schmelzfahne der Polycarbonatschmelze mit einer weiteren Walze an die Polyalkylenterephthalatfolie mit einem Druck von 1 bis 100 N/cm Walzenlänge angepreßt wird.

6. Verwendung der Verbundfolien gemäß Ansprüche 1 bis 3 zur Herstellung von Schalttafeln, Namensschildern und Folienschaltern.

## Claims

1. Transparent laminate film, consisting of

A) a transparent, thermoplastic polycarbonate film of a thickness from about 50 μm to 350 μm and

B) a transparent, thermoplastic polyalkylene terephthalate film of a thickness from 10 μm to 100 μm.

2. Laminate films according to Claim 1, characterised in that the thickness of the polycarbonate film is 100 μm to 200 μm.

3. Laminate films according to Claim 1 and 2, characterised in that the thickness of the polyalkylene terephthalate film is 25 μm to 50 μm.

4. Process for preparing the laminate films according to Claim 1 to 3, characterised in that the melts of the two components A) and B) are fed via a two-layer adaptor at temperatures of 260° C to 290° C to a slot die, and in that the melt web is stretched over a chill-roll take-off, it being necessary for the first take-off roll to be cooled to temperatures of about 10° C to 50° C, and the surface of this take-off roll being provided, as required, with a polished surface or a structured surface.

5. A process for preparing the laminate films according to Claim 1 to 3, characterised in that a transparent, unstretched thermoplastic polyalkylene terephthalate film which is bright on both sides and has a thickness of 10 to 100 μm, is coated on one side with a hot melt, at a temperature between 270 and 330° C, of thermoplastic, transparent polycarbonate, the polyalkylene terephthalate film running onto a cooling roll with a structured surface and at a temperature of 10° C to 50° C, and the melt web of the polycarbonate melt being pressed by means of a further roll against the polyalkylene terephthalate film under a pressure of 1 to 100 N/cm of roll length.

6. Use of the laminate films according to Claims 1 to 3 for the manufacture of switch panels, nameplates and foil switches.

## Revendications

1. Feuille composite transparente consistant en :

A) une feuille de polycarbonate thermoplastique transparente d'une épaisseur d'environ 50 à 350 μm, et

B) une feuille de téréphtalate de polyalkylène thermoplastique transparente d'une épaisseur de 10 à 100 μm.

2. Feuilles composites selon la revendication 1, caractérisées en ce que l'épaisseur de la feuille de polycarbonate est de 100 à 200 μm.

3. Feuilles composites selon les revendications 1 et 2, caractérisées en ce que l'épaisseur de la feuille de téréphtalate de polyalkylène est de 25 à 50 μm.

4. Procédé pour la fabrication des feuilles composites selon les revendications 1 à 3, caractérisé en ce que les masses fondues des deux composants A) et B) sont envoyées par un raccord à deux couches à une filière plate à des températures de 260 à 290° C et en ce que la nappe de masse fondue est extraite sur un dispositif d'extraction à rouleau refroidisseur, le premier rouleau extracteur devant être refroidi à des températures d'environ 10 à 50° C, et la surface de ce rouleau extracteur ayant selon les exigences une surface polie ou une surface structurée.

5. Procédé pour la fabrication des feuilles composites selon les revendications 1 à 3, caractérisé en ce que l'on applique une couche d'une masse fondue de polycarbonate transparent thermoplastique chauffée entre 270 et 330° C sur une face d'une feuille thermoplastique, non étirée transparente, brillante sur les deux faces, de téréphtalate de polyalkylène d'une épaisseur de 10 à 100 μm, la feuille de téréphtalate de polyalkylène passant sur un rouleau refroidisseur à surface structurée et d'une température de 10 à 50° C, et la nappe de masse fondue de polycarbonate étant pressée sur la feuille de téréphtalate de polyalkylène par un autre rouleau, de préférence revêtu de caoutchouc résistant à la température, avec une pression de 1 à 100 N/cm de longueur du rouleau.

6. Utilisation des feuilles composites selon les revendications 1 à 3 pour la fabrication de panneaux de distribution, de plaques aux noms et d'interrupteurs à membrane.